# EUROPÄISCHE PATENTSCHRIFT

(11) **EP 1 529 084 B1**
(45) Veröffentlichungstag und Bekanntmachung des Hinweises auf die Patenterteilung: **21.06.2006**
(21) Anmeldenummer: 03775129.4
(22) Anmeldetag: 07.08.2003
(51) Int. Cl.: C09C 1/66, C09D 5/36

(54) **KUPFERBASIERENDE METALLFLAKES, INSBESONDERE ZINK ENTHALTEND, UND VERFAHREN ZU IHRER HERSTELLUNG**
COPPER-BASED METAL FLAKES, IN PARTICULAR COMPRISING ZINC AND METHOD FOR PRODUCTION THEREOF
FLOCONS METALLIQUES A BASE DE CUIVRE CONTENANT NOTAMMENT DU ZINC ET PROCEDE DE FABRICATION

(30) Priorität: 20.08.2002 DE 10237957
(43) Veröffentlichungstag der Anmeldung: 11.05.2005
(73) Patentinhaber: Eckart GmbH & Co. KG, 90763 Fürth (DE); STEINER GMBH & Co. KG, 57339 Erndtebrück (DE)
(72) Erfinder: SCHUSTER, Thomas, 91207 Lauf (DE); HERZING, Wolfgang, 91233 Speikern (DE); TREUDE, Rolf, 57339 Erndtebrück-Schameder (DE); CICHANOWSKI, Stanley, Bennington, Vermont 05201 (US)
(74) Vertreter: Schneck, Herbert
(86) Internationale Anmeldenummer: PCT/EP2003/008728
(87) Internationale Veröffentlichungsnummer: WO 2004/026971

(56) Entgegenhaltungen:
- EP-A- 0 499 817
- US-A- 3 941 584
- US-A- 4 321 087
- DATABASE WPI Section Ch, Week 198601 Derwent Publications Ltd., London, GB; Class A82, AN 1986-003700 XP002260804 & JP 60 229966 A (SHINETSU CHEM IND CO LTD), 15. November 1985 (1985-11-15)
- PATENT ABSTRACTS OF JAPAN vol. 1997, no. 10, 31. Oktober 1997 (1997-10-31) & JP 09 165544 A (FUKUDA METAL FOIL &POWDER CO LTD), 24. Juni 1997 (1997-06-24)

## Beschreibung

Metallische Effektpigmente sind Pigmente, die gerichtete Reflexion an flächig ausgebildeten, orientierten Partikeln aufweisen (DIN 55944). Das Interesse an goldglänzenden Effektpigmenten ist groß, insbesondere in den Anwendungsgebieten Druck, Lack, Anstrich, Kunststoffeinfärbung, Kosmetik und Glaseinfärbung, da die goldähnlichen Produkte eine hohe ästhetische Qualität besitzen und den entsprechend beschichteten, bedruckten oder eingefärbten Materialien ein wertvolles Aussehen verleihen. Frühzeitig hat man damit begonnen, die teuren Echtgold-Flakes im dekorativen Bereich durch kostengünstigere Alternativen zu ersetzen.

Die bekanntesten Echtgold-Flake-Ersatzpigmente sind die sogenannten Goldbronzepulver, die überwiegend aus Kupfer/Zink-Legierungen bestehen und je nach Zusammensetzung unterschiedliche Farbtöne von Rotgold bis Reichgold aufweisen können (Pigment Handbook, Vol. 1, Second Edition, S. 805 ff, Wiley). Goldbronzepigmente werden durch Verdüsen einer schmelzflüssigen Kupfer/Zink-Legierung und anschließendes Mahlen des bei der Verdüsung entstandenen Grießes hergestellt. Beim Mahlprozess werden die Legierungspartikel plättchenförmig verformt und zerkleinert. In der Praxis wird Goldbronzepigment überwiegend trocken vermahlen. Um Kaltverschweißungen zu vermeiden, wird dem eingesetzten Grieß Schmiermittel wie beispielsweise Stearinsäure zugegeben. Eine Nachbehandlung des Mahlproduktes durch Bürsten oder schonendes Mahlen in speziellen Kugelmühlen dient der Glanzverbesserung des Metallpigments und wird als Polieren bezeichnet. Unregelmäßigkeiten der Oberflächen der Metallplättchen wirken glanzmindernd. Da sich beim Mahlvorgang das Generieren von Unregelmäßigkeiten in der Struktur der Oberflächen der Plättchen und unterschiedliche Plättchendicke nicht vermeiden lassen, weisen die auf diesem Weg hergestellten Goldbronzepigmente nicht den Glanz auf, der sich aus dem Reflexionsvermögen der Legierungen errechnet. Darüber hinaus zeigen praktisch alle über Mahlverfahren hergestellten Goldbronzepigmente leafing-Eigenschaften, d. h. sie schwimmen im Medium auf, was auf die beim Mahlprozess zugesetzten Schmiermittel zurückzuführen ist. Die Herstellung von non-leafing Goldbronzepigmenten erfordert aufwendiges Befreien von Schmiermittel.

Versuche, Echtgoldflakes über eisenoxidbeschichtete Glimmerpigmente (G. Pfaff u. R. Maisch, Farbe+Lack, Vol. 2, 1955, S. 89-93) oder eisenoxidbeschichtete Aluminiumpigmente (W.Ostertag, N.Mronga und P.Hauser, Farbe +Lack, Vol. 12, 1987, S. 973-976) zu ersetzen, führen hinsichtlich der erforderlichen Brillanz nicht zum Ziel. Zwar gelingt es über Interferenzeffekte interessante Farbtöne von Rotgold bis Grüngold herzustellen, es zeigt sich jedoch, dass über oxidische Reflexionsebenen nicht die hohen glanzbestimmenden Reflexionswerte von Metallen erreicht werden können.

Aus der US 4,321,087 ist bekannt, dass Metalle auf eine Unterlage abgeschieden und nach Ablösen und Zerkleinern Pigmente erhalten werden.

Als Verfahren zur Herstellung von metallisierten Schichten können die gängigen Aufdampfverfahren (Elektronenstrahl-Technologie, widerstands-, strahlungsbeheizte Verfahren) zur Anwendung kommen, die beispielsweise in G. Kienel (Herausg.) "Vakuumbeschichtung Band 1-5", VDI-Verlag 1995, ausführlich beschrieben werden.

Bei Legierungen aus zwei oder mehr Komponenten tritt aufgrund unterschiedlicher Dampfdrücke eine Fraktionierung auf. Es existieren unterschiedliche Verdampfungsmethoden (Flash-Verdampfung, Simultanverfahren oder Springstrahlverfahren), mit denen homogene Legierungsschichten beliebiger Zusammensetzung herstellbar sind (G. Kienel).

Aufgabe der vorliegenden Erfindung ist es, ein goldglänzendes, hochbrillantes metallisches Effektpigment mit vergleichbarer Legierungszusammensetzung wie sie die herkömmlichen Goldbronzepigmente besitzen (Kupfer/ Zink), zu entwickeln.

Es ist insbesondere das Ziel, ein goldglänzendes metallisches Effektpigment mit planparallelen Oberflächen und geringer gleichförmiger Partikeldicke bereitzustellen, so dass das Pigment in allen Bereichen der graphischen Industrie, insbesondere auch im Offsetdruck, angewandt werden kann.

Ein weiteres Ziel der vorliegenden Erfindung ist es, ein goldglänzendes metallisches Effektpigment in diversen Farbtönen von Rotgold bis Grüngold bereitzustellen.

Ein weiteres Ziel der vorliegenden Erfindung ist es, das goldglänzende metallische Effektpigment konrosionsstabil bereitzustellen, so dass es in den üblichen Anwendungsbereichen nicht zu einer Beeinträchtigung in Glanz und Farbton der Produkte kommt.

Es sollte darüber hinaus zu wirtschaftlich tragbaren Kosten hergestellt werden können.

Diese Aufgaben können gelöst werden durch ein einschichtig aufgebautes plättchenförmiges Metallpigment mit planparallelen Reflexionsebenen, das aus einer kupferbasierenden Legierung besteht, die durch Kondensation aus der Dampfphase abgeschieden ist. Als Legierungspartner eignet sich bevorzugt Zink. Die Koloristik der neuartigen goldglänzenden Pigmente ist überwiegend bestimmt vom Verhältnis von Kupfer zu Zink. Je höher der Kupferanteil ist, desto rotgoldener sind die Flakes. Typische Zusammensetzungen von Plättchen mit rotgoldenem bis gelb- bzw. grüngoldenem Glanz enthalten neben Kupfer 2 bis 40 % Zink und optional 0,1 - 6 % Silicium und/oder Aluminium. Die Plättchendicke liegt bei 10-100 nm, vorzugsweise bei 20-60 nm und lässt sich ohne Schwierigkeiten variieren. Sehr dünne Plättchen sind teilweise transparent.

Ein besonderes Charakteristikum der goldglänzenden Pigmente sind ihre perfekten planparallelen Oberflächen, ihr störungsfreier struktureller Aufbau und ihre gleichförmige Plättchendicke, was höchste Reflexionswerte ermöglicht.

Die wichtigsten Stufen des Herstellprozesses sind gegebenenfalls Aufbringen einer Release-Schicht auf einer Unterlage, Kondensationen der Legierung in Filmform auf der Release-Schicht oder auf der Unterlage, Ablösung des metallischen Films, Filmzerkleinerung und gegebenenfalls Klassierung der Pigmentpartikel. Die Verdampfung der Metalle im Vakuum erfolgt nach bekannten Methoden unter Verwendung der vorgefertigten Legierungen oder der Einzelmetalle. Das Ablösen des metallischen Films erfolgt entweder durch Auflösen der Release-Schicht oder durch Auflösen der Unterlage.

Die erfindungsgemäßen Pigmente zeigen höchste Brillanz und sind in vielen Anwendungsbereichen ausreichend korrosionsstabil. Ist eine besondere Korrosionsstabilität erforderlich, so ist es möglich, durch Oberflächenbelegung der hochglänzenden Pigmente deren Stabilität zu verbessern. Im Allgemeinen sind die Oberflächenbelegungen hinreichend dünn und beeinträchtigen das Glanzverhalten der Metallflakes praktisch nicht. Oberflächenbelegungen zur Verbesserung des Korrosionsverhaltens können bereits in der Vakuumkammer im Zuge der Metallfihnabscheidung, beispielsweise durch Vakuumabscheidung von SiOₓ beiderseits des Metallfilms oder über nasschemische Methoden während oder im Anschluss an die Filmzerkleinerung aufgebracht werden. Je nach Anforderung haben sich Schutzschichten aus SiO₂, Al₂O₃, Phosphat, Phosphorsäureester, Phosphinsäure, Silanen oder Kombinationen dieser Verbindungen bewährt.

Verwendung finden die goldglänzenden Metallflakes für Lacke, Anstrichmittel, Farben, Druckfarben, Kunststoffeinfärbung, Kosmetik, Glas und Keramik.

Im Einzelnen ist Folgendes auszuführen:

Die vorliegende Erfindung befasst sich mit einem neuartigen, aus einer Kupfer/Zink-Legierung bestehenden Effektpigment. Überraschungsweise lassen sich koloristisch geeignete Legierungen aus der Dampfphase im Vakuum abscheiden. Aus Legierungen bestehende Pigmente, die durch simultane Kondensation von Metalldämpfen entstehen, sind bislang unbekannt.

Geeignete Legierungen für die Entwicklung von brillanten Echtgold-Ersatzpigmenten über pvd-Verfahren sind k-upferbasierend und enthalten beispielsweise als weitere Legierungsbestandteile Zink sowie ggf. Aluminium und/oder Silber, Palladium und Silicium.

Koloristisch lässt sich über die Zusammensetzung der abgeschiedenen Legierung ein weiter Bereich zwischen Rotgold, Bleichgold und Grüngold gestalten. Hierbei spielt das farbgebende Kupfer die Hauptrolle. So haben die Oberflächen von Pigmenten mit 95 Gew.-% Kupfer einen rotgoldenen Glanz, während diejenigen mit nur 70 Gew.-% Kupfer grüngolden aussehen.

Koloristisch interessante Zusammensetzungen liegen beispielsweise bei 70 - 98% Kupfer, 30-2 % Zink. Liegen sehr dünne Flakes vor, so können diese teilweise Transparenz aufweisen. Interferenzeffekte können die oben beschriebene Koloristik geringfügig beeinflussen.

Die Dicke der goldglänzenden Metallflakes ist ohne Schwierigkeiten über die Verdampfungsrate der Metalle und über die Bandgeschwindigkeit einzustellen und zu steuern. Aus wirtschaftlichen Gründen werden i. A. Bandgeschwindigkeiten zwischen 2 und 5 m/sec. gewählt. Je nach Wunsch können dabei Metallfilmdicken zwischen 10 und 100 nm eingestellt werden. Für die Herstellung von goldglänzenden Metallflakes sind vorwiegend Dicken zwischen 20 und 60 nm von Interesse. Die Partikelgröße wird nach Ablösen der Metallfilme von der Unterlage durch mechanische Zerkleinerung der Filmbruchstücke eingestellt. Die Zerkleinerung kann mit geeigneten Rührern, Pumpen oder mit Hilfe von Ultraschallgeräten der in einem Lösemittel suspendierten Filmbruchstücke erfolgen. Im Allgemeinen sind Partikelgrößen zwischen 3 und 150 µm, vorzugsweise zwischen 5 und 50 µm von Interesse. Wie bei allen Effektpigmenten lässt sich der optische Eindruck durch Klassieren, d. h. Einstellen enger Partikelgrößenverteilungen mit unterschiedlichem mittlerem Durchmesser variieren. Die Klassierung kann beispielsweise in einem Dekanter vorgenommen werden.

Die charakteristischen Eigenschaften der goldfarbenen Metallflakes sind ihr hohes Reflexionsvermögen und eine sehr hohe Ergiebigkeit des Pigments bei der Anwendung. Das hohe Reflexionsvermögen beruht auf den spiegelglatten störungsfreien Oberflächen und der gleichförmigen Dicke der Plättchen. Mögliche Streuzentren werden auf ein Minimum reduziert. Die hohe Ergiebigkeit des Pigmentes gründet sich auf die geringe Dicke der Einzelpartikel, so dass mit einer vergleichsweise geringen Pigmentmenge bereits ausreichend hohe Deckung erzielt werden kann.

Die erfindungsgemäßen Pigmente werden hergestellt, indem optional eine Unterlage, beispielsweise eine PET-Folie oder ein umlaufendes Metallband, mit einem Releasecoat beschichtet wird. Die Beschichtung der Unterlage mit einem löslichen Harz oder Wachs kann über Tauch- oder Druckverfahren vorgenommen werden.

Die in Frage kommenden Metalle werden dann einzeln in Verdampfern im Hochvakuum verdampft und auf der Unterlage kondensiert.

Anschließend wird der Metallfilm abgelöst, indem entweder der Releasecoat oder die Unterlage aufgelöst wird, und in einem anwendungstechnisch geeigneten Lösemittel wie Isopropanol, Isopropylacetat, Ethylacetat oder Glykolether mittels eines geeigneten Rührwerks oder einer hohe Scherkräfte ausübenden Pumpe auf Pigmentpartikelgröße zerkleinert. Ultraschallzerkleinerung kann zusätzlich oder alternativ eingesetzt werden. Gegebenenfalls werden die Pigmentpartikel noch klassiert.

Um die Metallflächen der erfindungsgemäßen Pigmente vor Korrosion zu schützen, ist es möglich, diese in einem zusätzlichen Schritt mit Korrosionsschutzschichten zu versehen. Da diese Schichten dünn und niedrig brechend sind, haben sie praktisch keinen Einfluss auf das optische Verhalten der Pigmente. Grundsätzlich sind zwei Methoden des Aufbringens von Korrosionsschutzschichten möglich: Einmal durch Aufdampfen einer beidseitigen Schutzschicht während des Verdampfungsprozesses, zum anderen durch Auffällen einer Passivierungsschicht während oder nach der Zerkleinerung der Filmbruchstücke. Das Aufdampfen von Schutzschichten während des Verdampfungsprozesses wird in der Reihenfolge Schutzschicht, Legierungsfilm, Schutzschicht vorgenommen, wobei i. A. schwerlösliche aber leicht zu verdampfende Materialien wie SiOₓ oder MgF₂ gewählt werden. Das Auffällen einer Passivierungsschicht wird als nasschemische Reaktion durchgeführt. Bewährt hat sich das Auffällen einer dünnen SiO₂₋Schicht, zweckmäßiger Weise über einen Sol/Gel-Prozess durch Hydrolyse von Silanen und anschließende Silanolbehandlung, weiterhin die Auffällung von Aluminiumoxid, Siliciumoxid, Phosphat, Phosphorsäure, Phosphorsäureestern, Phosphinsäure, Silanen, organisch modifizierten Silicaten, Titanaten, Zirkonaten oder methacrylatbasierenden Polymerschichten oder Kombinationen dieser Verbindungen.

Die folgenden Beispiele sollen dazu dienen, die Erfindung näher zu beschreiben.

### Beispiel 1

In einem Roll-Coater der Firma Steiner GmbH & Co. KG wird eine PET-Unterlagefolie von 24 µm Dicke, welche mit einem Releasecoat beschichtet ist, mit einer Kupfer/Zinklegierung im Hochvakuum beschichtet. Der Releasecoat besteht aus acetonlöslichem Methylmethacrylatharz und wird in einem separaten Arbeitsgang vorab aufgedruckt. Das Vakuum wird auf 5 10⁻⁴ mbar eingestellt.

Die Geschwindigkeit, mit der die Unterlagebahn abgewickelt wird, beträgt 3 m/s. Kupfer sowie Zink werden in separaten Verdampfern mit einer Rate verdampft, die zu einer Metallfilmdicke auf der bewegten Unterlage von 40 nm führt. Nach abgeschlossener Beschichtung wird der Roll-Coater mit Stickstoff geflutet, der metallisierte PET-Wickel wird entnommen und in einer Ablösestation mit Aceton behandelt. Durch Auflösen des Releasecoats wird der Metallfilm von der Unterlage abgetrennt. Die metallischen Filmfragmente werden in einer Zentrifuge aufkonzentriert und von der releasecoathaltigen Acetonlösung abgetrennt. Danach wird der Filterkuchen in eine Isopropanollösung eingetragen, wo der Film über 20 Minuten zerkleinert wird. Die Suspension, in der die Metallflakes vorliegen, ist 12 %-ig.

Die erhaltene Pigmentsuspension zeigt goldglänzende Pigmentpartikel höchster Brillanz. Die mittlere Partikelgröße der Plättchen liegt bei 10 µm (Cilas). Chemische Analysen zeigen, dass das Pigment 70 % Kupfer und 30 % Zink enthält. Röntgenanalysen ergeben, dass die Elemente in einer homogenen Legierungsform vorliegen.

### Stabilisierung:

1000 g der oben hergestellten 12 %-igen Pigmentsuspension in Isopropanol werden bis zum Siedepunkt erhitzt und mit 11g Tetraethoxysilan und 10 g Wasser versetzt. Danach wird über einen Dosimaten eine 10 %-ige wässrige Lösung DMEA zugegeben bis der pH-Wert 8 erreicht ist. Unter Beibehaltung des pH-Wertes wird über einen Zeitraum von 2 Stunden gerührt.

Danach werden 1,4 g Diphenyldimethoxysilan, das in 12 g Isopropanol gelöst ist, gleichmäßig über 4 Stunden unter Rühren zudosiert. Anschließend gibt man noch 0,5 g 3-Aminopropyltrimethoxysilan (Dynasilan AMMO) hinzu und kühlt das Gemisch über 10 Stunden unter Rühren ab.

Das Metallpigment liegt danach korrosionsstabilisiert vor.

## Patentansprüche

1. Glänzende kupferbasierende Metallflakes, die neben Kupfer mindestens einen weiteren metallischen Legierungsbestandteil enthalten und über Vakuumabscheidung von Metallfilmen auf einer Unterlage, Ablösen der Filme von der Unterlage und anschließende Zerkleinerung der Filme hergestellt sind.

2. Glänzende kupferbasierende Metallflakes nach Anspruch 1, **dadurch gekennzeichnet, dass** die Flakes mindestens 60 % Kupfer und zwischen 2 und 40 % Zink enthalten.

3. Glänzende kupferbasierende Metallflakes nach Anspruch 1 oder 2, **dadurch gekennzeichnet, dass** die Flakes als zusätzlichen Legierungsbestandteil Silicium enthalten.

4. Glänzende kupferbasierende Metallflakes nach einem der Ansprüche 1 bis 3, **dadurch gekennzeichnet, dass** das plättchenförmige Effektpigment planparallele Oberflächen und eine Dicke zwischen 10 und 100 nm, vorzugsweise zwischen 20 und 60 nm aufweist.

5. Glänzende kupferbasierende Metallflakes nach einem der Ansprüche 1 bis 4, **dadurch gekennzeichnet, dass** die Oberfläche der Pigmentpartikel mit einer Korrosionsschutzschicht belegt ist.

6. Glänzende kupferbasierende Metallflakes nach Anspruch 5, **dadurch gekennzeichnet, dass** die Korrosionsschutzschicht Aluminiumoxid, Siliciumoxid, Phosphat, Phosphorsäure, Phosphorsäureester, Phosphinsäure, Silane, organisch modifizierte Silicate, Titanate, Zirkonate oder methacrylatbasierende Polymerschichten oder Kombinationen dieser Verbindungen enthält.

7. Verfahren zur Herstellung glänzender kupferbasierender Metallflakes nach einem der Ansprüche 1 bis 6, **gekennzeichnet durch:**
a) ggf. Aufbringen eines Releasecoats auf eine Unterlage
b) Aufbringen eines Metallfilms auf den Releasecoat bzw. die Unterlage **durch** getrenntes Verdampfen der Legierungsbestandteile
c) Ablösen des Metallfilms
d) Zerkleinern zu Pigmentteilchen.

8. Verfahren nach Anspruch 7, **dadurch gekennzeichnet, dass** das Aufbringen des Metallfilms durch getrenntes Verdampfen einer Legierung und eines oder mehrerer weiterer Bestandteile erfolgt.

9. Verfahren nach einem der Ansprüche 7 oder 8, **dadurch gekennzeichnet, dass** das Aufbringen des Metallfilms durch Elektronenstrahl, Widerstands- oder Strahlungsbeheizen erfolgt.

10. Verfahren nach einem der Ansprüche 7 bis 9, **dadurch gekennzeichnet, dass** das Aufbringen des Metallfilms durch Flash-Verdampfen, Simultanverdampfen oder Springstrahlverdampfen erfolgt.

## Claims

1. Lustrous copper-based metal flakes that contain, in addition to copper, at least one additional metallic alloy component and are produced via vacuum deposition of metal films onto a carrier sheet, stripping of the films from the carrier sheet and subsequent comminuting of the films.

2. Lustrous copper-based metal flakes according to claim 1, **characterized in that** the flakes contain at least 60% copper and between 2 and 40% zinc.

3. Lustrous copper-based metal flakes according to claim 1 or 2, **characterized in that** the flakes contain silicon as an additional alloy component.

4. Lustrous copper-based metal flakes according to any of claims 1 through 3, **characterized in that** the flake-shaped effect pigment has plane-parallel surfaces and a thickness between 10 and 100 nm, preferably between 20 and 60 nm.

5. Lustrous, copper-based metal flakes according to any of claims 1 through 4, **characterized in that** the surface of the pigment particles is coated with an anticorrosive layer.

6. Lustrous copper-based metal flakes according to claim 5, **characterized in that** the anticorrosive layer contains aluminum oxide, silicon oxide, phosphate, phosphoric acid, phosphoric ester, phosphinic acid, silanes, organically modified silicates, titanates, zirconates or methacrylate-based polymer layers or combinations of these compounds.

7. A method for producing lustrous, copper-based metal flakes according to any of claims 1 through 6, **characterized by**
a) optionally applying a release coat on a carrier sheet
b) applying of a metal film onto the release coat or the carrier sheet by separate evaporation of the alloy components
c) stripping of he metal film
d) comminuting to pigment particles.

8. A method according to claim 7, **characterized in that** applying of the metal film takes place through separate evaporation of an alloy and one or more additional components.

9. A method according to any of claims 7 or 8, **characterized in that** applying of the metal film takes place through electron beam, resistance heating, or radiation heating.

10. A method according to any of claims 7 through 9, **characterized in that** applying of the metal film takes places through flash evaporation, simultaneous evaporation, or jumping beam evaporation.

## Revendications

1. Paillettes métalliques brillantes à base de cuivre qui, outre le cuivre, contiennent au moins un autre constituant d'alliage métallique et qui sont produits par dépôt sous vide de films métalliques sur un substrat, séparation des films d'avec le substrat et ensuite pulvérisation des films.

2. Paillettes métalliques brillantes à base de cuivre selon la revendication 1, **caractérisées en ce que** les paillettes contiennent au moins 60% de cuivre et de 2 à 40% de zinc.

3. Paillettes métalliques brillantes à base de cuivre selon la revendication 1 ou 2, **caractérisées en ce que** les paillettes contiennent du silicium en tant que constituant supplémentaire de l'alliage.

4. Paillettes métalliques brillantes à base de cuivre selon l'une des revendications 1 à 3, **caractérisées en ce que** le pigment à effet en forme de paillettes présente des surfaces planes et parallèles et une épaisseur dans la plage de 10 à 100 nm, de préférence de 20 à 60 nm.

5. Paillettes métalliques brillantes à base de cuivre selon l'une des revendications 1 à 4, **caractérisées en ce que** la surface des particules de pigment est revêtue d'une couche de protection contre la corrosion.

6. Paillettes métalliques brillantes à base de cuivre selon la revendication 5, **caractérisées en ce que** la couche de protection contre la corrosion contient de l'oxyde d'aluminium, de l'oxyde de silicium, du phosphate, de l'acide phosphorique, des esters de l'acide phosphorique, de l'acide phosphinique, des silanes, des silicates organomodifiés, des titanates, des zirconates ou des couches polymères à base de méthacrylate, ou des combinaisons de ces composés.

7. Procédé de production de paillettes métalliques brillantes à base de cuivre selon l'une des revendications 1 à 6, **caractérisé par** :
a) le dépôt éventuel d'un revêtement antiadhésif sur un substrat,
b) le dépôt d'un film métallique sur le revêtement antiadhésif ou sur le substrat par vaporisation séparée des constituants de l'alliage,
c) la séparation du film métallique,
d) la pulvérisation en particules de pigment.

8. Procédé selon la revendication 7, **caractérisé en ce que** le dépôt du film métallique se fait par vaporisation séparée d'un alliage et d'un ou plusieurs autres constituants.

9. Procédé selon l'une des revendications 7 ou 8, **caractérisé en ce que** le dépôt du film métallique se fait par un faisceau d'électrons, par chauffage résistif ou par rayonnement.

10. Procédé selon l'une des revendications 7 à 9, **caractérisé en ce que** le dépôt du film métallique se fait par vaporisation éclair, par vaporisation simultanée ou par vaporisation avec un canon à électrons pulsé.
